# FASCICULE DE BREVET EUROPEEN

(11) **EP 3 201 521 B1**
(45) Date de publication et mention de la délivrance du brevet: **23.12.2020**
(21) Numéro de dépôt: 15777640.2
(22) Date de dépôt: 24.09.2015
(51) Int. Cl.: F21S 41/143, F21S 41/29, F21S 41/55, F21S 41/63, B60Q 1/20

(54) **DISPOSITIF LUMINEUX DE VEHICULE AVEC UN ELEMENT OPTIQUE PLAQUE AVEC LE SUPPORT DE SOURCE LUMINEUSE**
BELEUCHTUNGSVORRICHTUNG FÜR EIN FAHRZEUG MIT EINEM AM LICHTQUELLENTRÄGER GEKLEMMTEN OPTISCHEN ELEMENT
LIGHTING DEVICE FOR A VEHICLE WITH AN OPTICAL ELEMENT CLAMPED TOGETHER WITH THE LIGHT SOURCE SUPPORT

(30) Priorité: 30.09.2014 FR 1459274
(43) Date de publication de la demande: 09.08.2017
(73) Titulaire: Valeo Vision Belgique, 7822 Meslin l'Evêque (BE)
(72) Inventeur: DINANT, Franck, B-1460 Virginal (BE); DEBERT, Florestan, F-59310 Nomain (FR); DELOURME, Jean-François, F-59150 Wattrelos (FR)
(74) Mandataire: Valeo Vision
(86) Numéro de dépôt international: PCT/EP2015/072017
(87) Numéro de publication internationale: WO 2016/050610

(56) Documents cités:
- EP-A2- 1 547 862
- EP-A2- 2 623 370
- FR-A1- 2 887 960
- FR-A1- 2 907 196
- FR-A1- 2 993 632
- US-A- 4 797 790
- US-A1- 2004 042 070

## Description

La présente invention concerne un dispositif lumineux, notamment de véhicule automobile. Plus particulièrement, la présente invention concerne un dispositif d'éclairage de la route, notamment un feu antibrouillard.

Dans les dispositifs lumineux de véhicule, il est important que le faisceau lumineux respecte certaines caractéristiques spatiales de répartition de l'intensité lumineuse. Par exemple, certains projecteurs doivent pouvoir réaliser un faisceau lumineux délimité par une ligne de coupure à un certain niveau au-dessus de la chaussée.

Pour cela, il est faut un positionnement précis de la source lumineuse de ces dispositifs lumineux par rapport à l'élément optique qui va dévier ses rayons de manière à former le faisceau lumineux désiré.

Par exemple dans différents projecteurs connus, la source lumineuse est fixée au boîtier par un support et l'élément optique est également fixé au boîtier. C'est notamment le cas dans les feux antibrouillard où la lampe est fixée via un porte-lampe à l'arrière du boîtier et où le réflecteur est fixé au boîtier via un berceau . La demande de brevet FR2993632 A1 montre par exemple un projecteur pour véhicule comprenant une lentille et des moyens réalisant une ligne de coupure du faisceau, ledit dispositif étant configuré pour autoriser un réglage d'un positionnement de ladite ligne de coupure, selon une direction donnée, notamment verticale, en fonction d'un positionnement angulaire de ladite lentille autour d'un axe d'articulation. Le projecteur comprend en outre une glace de fermeture et une pièce de style ou cache située entre ladite glace de fermeture et ladite lentille.

De tels projecteurs présentent donc plusieurs éléments en contacts entre la source lumineuse et l'élément optique coopérant avec elle. Ces différents contacts sont autant de tolérances à prendre en compte lors de la conception du projecteur. Plus il y en a, plus la réalisation de ces projecteurs sera délicate.

Le problème technique que vise à résoudre l'invention est donc de simplifier la réalisation de dispositifs lumineux de véhicule, au regard des tolérances entre la source lumineuse et l'élément optique qui dévie ses rayons.

A cet effet, un premier objet de l'invention est un dispositif lumineux de véhicule automobile, comprenant :
- un boîtier et une glace de fermeture fermant une ouverture avant du boîtier et transparente pour laisser passer les rayons lumineux émis par ledit dispositif lumineux,
- un support de source lumineuse dans le boitier et sur lequel est fixée ou est destinée à être fixée une source lumineuse,
- un élément optique agencé pour dévier les rayons lumineux émis par la source lumineuse,
- un élément de plaquage fixé au boîtier, l'élément optique étant fixé par rapport à la source lumineuse en étant au moins partiellement enserré entre le support de source lumineuse et l'élément de plaquage, et
- au moins un moyen élastique enserré entre l'élément de plaquage et ledit moyen optique et agencé de manière à être élastiquement déformable selon une direction allant de l'élément de plaquage vers l'élément optique.

Ainsi le nombre d'éléments entre la source lumineuse a été réduit, puisque l'élément optique est relié au support de la source lumineuse sans passer par le boîtier. La source lumineuse et l'élément optique font également partie de la même chaîne de cote. On obtient ainsi plus de souplesse et/ou de précision dans la réalisation du dispositif lumineux.

De plus, les défauts de tolérance sur l'ensemble source lumineuse, support de la source lumineuse et élément de plaquage, sont absorbés par le moyen élastique, notamment des tolérances par rapport au boitier.

Selon une réalisation de l'invention, l'élément optique est directement en contact avec le support de la source lumineuse. La chaine de cote est ainsi diminuée. Notamment, l'élément optique est en appui direct contre le support de source lumineuse

Selon une réalisation de l'invention, le moyen élastique est en lien direct d'un côté contre l'élément de plaquage et/ou de l'autre côté contre le moyen optique. Le lien direct avec l'élément optique permet d'assurer un plaquage plus précis de l'élément optique sur le support de la source lumineuse. Le lien direct avec l'élément de plaquage renforce également ce plaquage.

On peut donc obtenir des réalisations de l'invention très précises, en ayant une succession directe du support de source lumineuse, de l'élément optique, du moyen élastique et de l'élément de plaquage. L'élément de plaquage assure le maintien du plaquage de l'élément optique et du support de source lumineuse.

Selon une réalisation de l'invention, l'élément de plaquage et éventuellement le support de source lumineuse peuvent être directement fixés au boitier. Le boitier permet ainsi d'assurer le plaquage des différents éléments entre eux.

L'invention peut optionnellement présenter une ou plusieurs des caractéristiques suivantes :
- le moyen élastique est venu de matière en une seule pièce avec ledit élément de plaquage ; on améliore ainsi la précision ;
- le moyen élastique est en appui contre l'élément optique ;
- l'élément optique comprend une partie de déviation des rayons lumineux émis par la source lumineuse et une partie d'articulation mobile entre une première partie d'articulation fixe et une deuxième partie d'articulation fixe, le moyen élastique comprenant la première partie d'articulation fixe, et le support de source lumineuse comprenant la deuxième partie d'articulation fixe ; l'élément optique est ainsi articulé et mobile entre le support de source lumineuse et l'élément de plaquage ; cela permet d'ajuster la hauteur du faisceau lumineux ; le moyen élastique permet de maintenir l'élément optique plaqué contre le support de la source lumineuse tout en permettant l'articulation de l'élément optique, y compris en cas de contact direct entre d'un côté le moyen élastique et de l'autre le support de la source lumineuse ;
- l'élément de plaquage présente une armature fixée au boîtier et portant le moyen élastique, ce dernier présentant deux pattes reliant chacune la première partie d'articulation fixe à l'armature et maintenant cette première partie d'articulation à distance de l'armature, les pattes s'écartant l'une de l'autre depuis la première partie d'articulation fixe jusqu'à l'armature, de manière à ce que l'élasticité du moyen élastique soit conférée par déformation des pattes par rapprochement de la première partie d'articulation fixe vers l'armature ;
- le moyen élastique a une forme d'accolade dont les branches forment lesdites pattes, la première partie d'articulation fixe étant au sommet de l'accolade ;
- le bord de l'armature en vis-à-vis de la portion du moyen élastique où est formée la première partie d'articulation fixe présente une butée formée par une protubérance s'étendant en direction de cette portion ; ainsi la déformation de l'élément élastique est limitée, conférant une meilleure durabilité des pattes ;
- l'armature comprend un moyen de fixation à emboitement élastique, emboité dans le boîtier, notamment une protubérance d'emboitement, et agencé de manière à maintenir l'élément de plaquage plaqué contre l'élément optique par l'intermédiaire du moyen élastique ; on peut ainsi fixer l'élément optique au support de source lumineuse par simple plaquage ;
- le moyen de fixation à emboitement élastique, la première partie d'articulation fixe et éventuellement la butée sont alignés selon la direction d'emboitement de l'élément de plaquage dans le boitier ; cela permet d'améliorer le plaquage ;
- le moyen de fixation à emboitement élastique est une protubérance s'étendant transversalement par rapport à la direction d'emboitement de l'élément de plaquage dans le boitier et placée au niveau de la butée ; cet agencement permet pour le moulage de l'élément de plaquage, de réaliser un tiroir commun dans le moule, pour permettre la formation d'une part de l'évidement entre les pattes et l'armature et d'autre part cette protubérance ;
- la partie d'articulation mobile comprend deux bras de part et d'autre de la partie de déviation de l'élément optique, ces bras étant libres en rotation dans lesdites parties d'articulation fixes de manière à ce que l'élément optique soit apte à être orienté par rotation autour d'un axe de rotation passant par ces deux bras ; il s'agit d'une articulation facile à réaliser ; l'axe de rotation peut par exemple être destiné à être horizontal lorsque le dispositif lumineux est monté dans un véhicule ; permettant ainsi un réglage en hauteur du faisceau lumineux ;
- les bras sont des cylindres ou des portions de cônes et les parties d'articulation fixes sont des creux ; selon une réalisation de l'invention les surfaces concaves de ces creux sont des portions de cylindre ou coniques de forme complémentaire de ces bras ; ces formes sont particulièrement adaptées à un enserrement de l'élément optique en le gardant libre en rotation ;
- l'élément optique est une lentille ;
- l'armature est un cadre de fixation ;
- l'élément de plaquage est un masque placé en avant du support de source lumineuse selon la direction d'émission du faisceau lumineux par ledit dispositif lumineux ; un tel masque permet de cacher les câbles, le fond du boîtier ou autres éléments de formes purement fonctionnelles à la vue d'un observateur extérieur au dispositif lumineux ;
- l'armature du masque est un enjoliveur visible depuis l'extérieur dudit dispositif lumineux avec une ouverture centrale à travers laquelle passe les rayons lumineux émis par la source lumineuse, après ou avant déviation par l'élément optique ; ainsi vu de face depuis l'extérieur la partie esthétique du masque peut entourer l'élément optique ; de plus le plaquage est meilleur lorsque le masque présente en plus deux dits moyens élastiques de part et d'autre de cette ouverture centrale, notamment à côté de la périphérie du masque ; c'est ainsi une façon simple d'assurer un plaquage efficace avec un masque, surtout pour un dispositif lumineux selon l'invention avec un boîtier cylindrique ;
- l'élément optique est une lentille présentant une partie optique déviant les rayons de la source lumineuse, la partie optique étant logée dans ladite ouverture centrale, le moyen élastique et la partie d'articulation mobile de la lentille étant entre l'enjoliveur et le support de source lumineuse ;
- la glace de fermeture est soudée audit boîtier par une soudure obtenue par un soudage par vibration ; ce type de soudure est particulièrement avantageux car il n'est plus nécessaire d'utiliser une colle ; il est également particulièrement adapté pour la présente invention, car l'élément élastique va pouvoir absorber les vibrations utilisées lors de du soudage et éviter ainsi que celles-ci ne se transmettent via l'élément de plaquage, et que ce dernier ne se soude à l'élément optique, ce qui est d'autant plus gênant si ce dernier est mobile ;
- la source lumineuse est une diode électroluminescente ; la présente invention est particulièrement utile dans le cadre d'un dispositif lumineux avec une diode électroluminescente ; en effet comme cette dernière est de taille très réduite comparée à des filaments de lampes classiques, les jeux et les imprécisions ont plus d'impact ;
- le support de la source lumineuse est un dissipateur thermique, notamment un radiateur, la diode électroluminescente étant destinée à être en contact thermique avec le dissipateur thermique ;
- le boîtier présente une portion cylindrique à l'intérieur de laquelle suivant le support de source lumineuse, la lentille et l'élément de plaquage s'empilent selon cet ordre, selon une direction parallèle à l'axe de la portion cylindrique ; on a ainsi un montage du dispositif lumineux simplifié, d'autant plus intéressant lorsque le dispositif lumineux est un feu antibrouillard, notamment destiné à être monté dans le bouclier avant du véhicule ;
- l'élément de plaquage présente une périphérie en contact avec les bords du boîtier ; on a ainsi un dispositif où les pièces sont ajustées au plus près ; cette caractéristique est d'autant plus intéressante dans le cas d'un soudage par vibrations de la glace au boitier ; en effet dans ce cas un exploite davantage les capacités du moyen élastique, car les vibrations se transmettront beaucoup plus facilement du boitier à l'élément optique via l'élément de plaquage ;
- l'élément optique est agencé de manière à réfléchir les rayons lumineux de manière à former un faisceau d'éclairage présentant une ligne de coupure ; la précision du dispositif selon l'invention est d'autant plus utile dans ce cas, car la ligne de coupure doit être positionnée précisément pour ne pas éblouir les conducteurs des véhicules venant en sens inverse ou suivis par un véhicule équipé d'un dispositif lumineux selon l'invention ;
- le dispositif lumineux est un feu antibrouillard ;

Un autre objet de l'invention est un véhicule comprenant un dispositif lumineux selon l'invention.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
- la figure 1 est une vue en perspective qui représente de façon éclatée un dispositif lumineux selon l'invention ;
- la figure 2 est une vue de face du dispositif lumineux de la figure 1, illustré de façon assemblé ;
- la figure 3 est une coupe vue en perspective du dispositif lumineux de la figure 2, selon un plan perpendiculaire à la vue de la figure 2 et passant par l'axe 3 ;
- la figure 4 est une vue en perspective de l'élément de plaquage du dispositif lumineux des figures précédentes,
- la figure 5 est une vue en perspective du dispositif lumineux de la figure 2, sans la glace de fermeture, ni l'élément de plaquage ;
- la figure 6 est une vue de côte du dispositif lumineux de la figure 2, sans le boitier, ni la glace de fermeture.

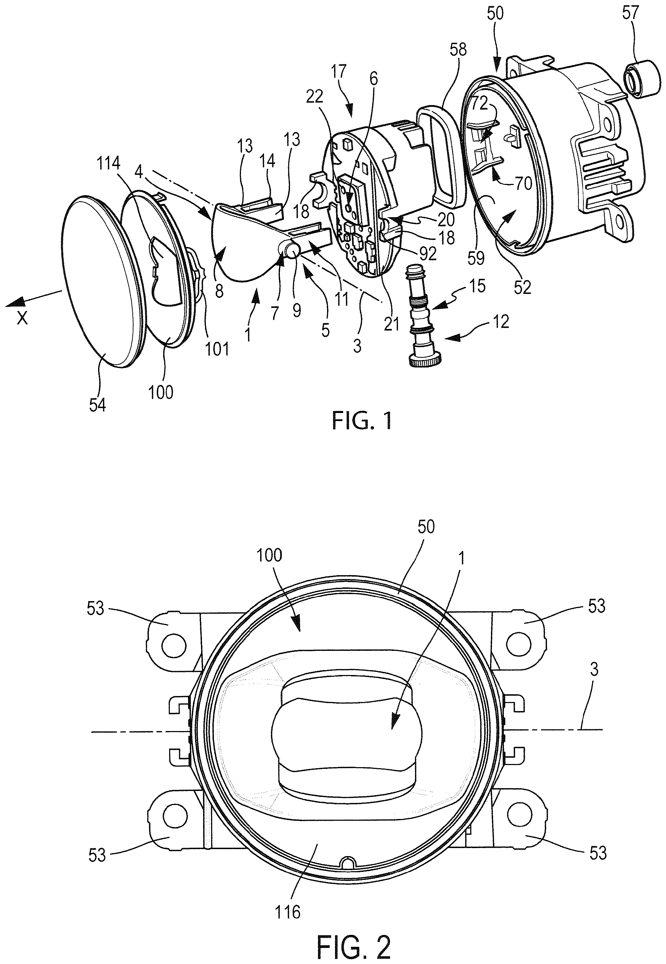

Comme illustré aux figures 1 à 3, le dispositif lumineux comprend un boîtier 50 définissant un logement 52 à l'intérieur duquel sont disposés une source lumineuse 6 et l'élément optique 1 déviant ses rayons. De façon classique, ledit projecteur pourra en outre comprendre une glace de fermeture 54 et une pièce de style ou masque 100, situé entre ladite glace de fermeture 54 et l'élément optique 1, selon la direction d'émission X du faisceau lumineux par le dispositif lumineux.

Le boîtier 50 se présente, par exemple, sous la forme d'une enveloppe sensiblement cylindrique. Le boitier peut comprendre des oreilles de fixation 53 destinées à être fixées au véhicule.

Le dispositif lumineux permet l'émission d'un faisceau lumineux tronqué ou à tout le moins présentant une décroissance très rapide de la luminosité émise en dessous d'un certain niveau correspondant à ladite ligne de coupure. Par exemple, le faisceau se trouve limité sous un plan, notamment destiné à être sensiblement horizontal et à se trouver à une certaine hauteur au dessus de la chaussée.

Dans l'exemple illustré, le dispositif est un projecteur générant un faisceau antibrouillard, présentant donc une ligne de coupure horizontale; ce projecteur est encore appelé feu antibrouillard ou projecteur antibrouillard.

Ce dispositif est configuré pour autoriser un réglage d'un positionnement de la ligne de coupure du faisceau, selon une direction donnée, notamment destinée à être verticale.

Dans l'exemple illustré l'élément optique est une lentille 1, présentant une partie optique 4, délimitée par un dioptre arrière et un dioptre avant. A noter que dans la présente demande, les termes « avant » et « arrière » s'entendent par rapport au sens d'émission des rayons lumineux par le dispositif lumineux. Les dioptres avant et arrière sont agencés de manière à réaliser la ligne de coupure. Selon un exemple de réalisation non illustré, on peut également avoir des dioptres portant des stries agencées pour dévier les rayons lumineux de manière à former la ligne de coupure.

Le réglage de la position de la ligne de coupure est réalisé par variation du positionnement angulaire de la lentille 1 autour d'un axe de rotation 3, destiné à être orienté selon l'axe transversal du véhicule équipé dudit dispositif lumineux. Dans cet exemple, pour permettre ce réglage, la lentille 1 comprend également une partie d'articulation mobile 5, comportant des bras 7 en rotation autour de l'axe de rotation 3.

On dispose de la sorte d'une solution grâce à laquelle le réglage de la ligne de coupure s'effectue par un actionnement d'un seul organe, à savoir la lentille 1, servant à la transmission du faisceau.

Ladite partie optique 4 et ladite partie d'articulation mobile 5 sont avantageusement constituées de la même matière. Avantageusement, ladite partie d'articulation 5 et ladite partie optique 4 sont venues de matière en une celle pièce.

La source lumineuse 6 peut être, selon cet exemple, une diode électroluminescente, encore appelée DEL ou LED, placée en amont de la lentille 1 selon le sens d'émission du faisceau lumineux par le dispositif lumineux.

Le support 17 de cette source lumineuse 6 est fixé directement sur le boitier 50 du dispositif lumineux. Il positionne et fixe ainsi la source dans le boitier 50.

La ligne de coupure est ici obtenue par un agencement mutuel de la lentille 1, notamment de ses dioptres avant et arrière, et de la source lumineuse 6, comme cela est connu, notamment des documents EP1762776, en particulier les modes de réalisation correspondant aux figures 11 et suivantes, et/ou EP1970619, en particulier le mode de réalisation de la figure 1.

De façon avantageuse, l'axe de rotation 3 passe sensiblement par la source lumineuse 6. La lentille 1 pourra en outre présenter un foyer au niveau de la source lumineuse 6. On dispose de la sorte d'un faisceau dont les caractéristiques ne varient pas en fonction du positionnement angulaire de la lentille 1 et donc ne dépendent pas du positionnement de la ligne de coupure.

Ladite partie optique 4 s'étend, par exemple, à partir de bras 7 de ladite partie d'articulation 5 en s'écartant radialement de l'axe de rotation 3. Autrement dit, ladite lentille 1 comprend des flancs s'étendant en direction dudit axe de rotation 3 à partir d'une zone frontale 8 de ladite lentille 1, ladite zone frontale 8 étant la partie de ladite lentille 1 se trouvant la plus éloignée de l'axe de rotation 3. Ladite partie optique 4 de la lentille 1 s'étend en particulier de part et d'autre de ladite zone frontale 8.

Les bras 7 sont situés de part et d'autre de ladite partie optique 4, selon la direction de l'axe de rotation 3. Ils comprennent, par exemple, des tourillons 9 d'articulation de la lentille 1 autour de l'axe de rotation 3. Les tourillons 9 présentent une forme cylindrique et sont orientés selon l'axe de rotation 3. Le dispositif lumineux est configuré pour autoriser une rotation des tourillons 9 sur eux-mêmes autour de l'axe de rotation 3 et, par suite, de l'ensemble de la lentille 1 autour du même axe.

Ladite partie d'articulation mobile 5 comprend en outre ici des moyens d'entrainement en rotation de la lentille 1. Lesdits moyens d'entrainement comprennent, par exemple, au moins une fourchette 11 présentant un nervurage, destinée à coopérer avec une vis de réglage 12, orientée transversalement, notamment orthogonalement, à l'axe de rotation 3 et/ou audit nervurage.

Les fourchettes 11 sont ici issues desdits tourillons 9. Elles comprennent des flancs latéraux 13, orientés radialement par rapport à l'axe de rotation. Lesdits flancs latéraux 13 des fourchettes 11 sont munis de nervures 14 situées en vis-à-vis les unes des autres d'un desdits flanc latéral 13 à l'autre. Les nervures 14 définissent de la sorte une contrepartie à un filetage 15 situé au niveau de la vis de réglage 12.

Les moyens d'entrainement peuvent être positionnés de part et d'autre de ladite partie optique 4 de la lentille 1, selon l'axe de rotation 3. Cela permet de pouvoir choisir de placer la vis de réglage 12 à droite ou à gauche lors de l'assemblage de dispositif.

Le support de source lumineuse 17 comprend ici des bras 18 du support, deux dans cet exemple, de part et d'autre de l'axe d'émission global de la DEL. Lesdits bras 18 du support sont destinés à coopérer avec ladite partie d'articulation mobile 5 de la lentille 1, en particulier les tourillons 9, de façon à conférer à ladite lentille 1 un degré de liberté en rotation autour de l'axe de rotation 3, sous l'action de la vis de réglage 12. Les bras 18 du support sont venus de matière avec le support 17 de la source lumineuse 6, et s'étendent selon une direction perpendiculaire à l'axe de rotation 3. Ces bras 18 du support présentent en extrémité distale une partie d'articulation fixe 20, agencée de façon à accueillir lesdits tourillons 9 en les laissant libres en rotation autour de l'axe de rotation 3. Dans cet exemple, il s'agit d'une concavité 20 dont la surface est une portion de cylindre complémentaire de la forme des tourillons 9.

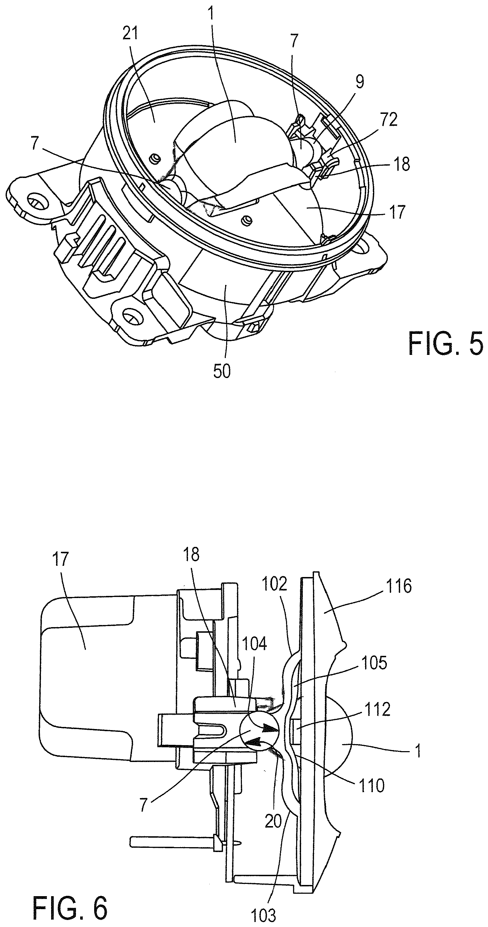

Sur la figure 5, le dispositif lumineux est représenté sans le masque pour permettre de voir la lentille 1 avec ses tourillons 9 logés dans les concavités 20 du support 17 de source lumineuse 6.

Le masque 100, forme un élément de plaquage. Comme illustré en figure 1, cet élément de plaquage s'empile dans le boitier 50 du dispositif lumineux et se fixe dans ce dernier. En étant ainsi empilé, il plaque les tourillons 9 dans les concavités 20 du support 17. La figure 6, illustre le dispositif lumineux sans le boitier pour permettre de voir ce plaquage.

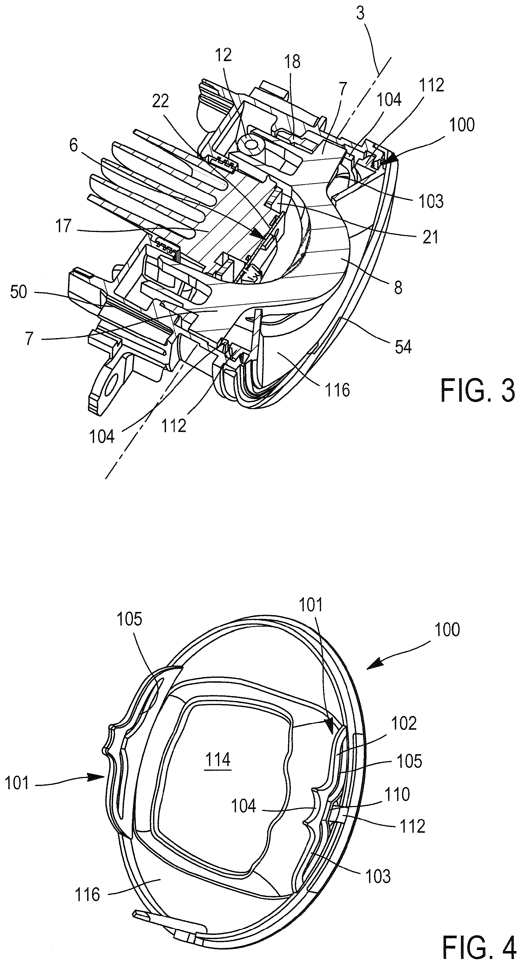

Ce masque 100, illustré en détails en figure 4, comprend deux moyens élastiques 101 et une armature 116. Cette dernière forme l'enjoliveur du masque. Ces moyens élastiques 101 sont de part et d'autre du masque 100 et s'étendent vers et jusqu'aux tourillons 9.

Chaque moyen élastique 101 a une forme d'accolade dont les branches forment deux pattes 102 et 103, le sommet de l'accolade formant une concavité 104. Les pattes 102 et 103 sont reliées à leurs extrémités d'un côté à cette concavité 104 et de l'autre à l'enjoliveur 116. Hormis les extrémités reliant les pattes à l'enjoliveur, les pattes 102 et 103 sont à distance de l'enjoliveur 116. Il y a ainsi un évidement 105 entre une partie des pattes et la concavité 104 portée par ces pattes. La concavité 104 peut donc se rapprocher de l'enjoliveur par déformation des pattes, conférant l'élasticité au moyen élastique 101. La forme d'accolade simplifie la réalisation de ce moyen déformable.

Ces concavités 104 du masque 101, ont une forme de potion cylindrique complémentaire de la forme des tourillons. Elles forment donc également une partie d'articulation fixe, se plaquant contre les tourillons 9.

Le masque plaque donc les tourillons 9, et donc la lentille 1, contre le support 17 de la source lumineuse, via l'élément élastique 101. La lentille 1 est ainsi fixée directement au support de la source lumineuse 17.

La mobilité de la lentille 1 est donc conférée par deux articulations, chacune formée par les concavités 104 et 20, formant une première partie d'articulation fixe 104 et un deuxième partie d'articulation fixe 20, que comprennent respectivement l'élément élastique 101 correspondant et le bras 18 correspondant du support 17 de la source lumineuse, ainsi que les tourillons 9, formant la partie d'articulation mobile 5 par rapport aux parties d'articulation fixe.

Dans cet évidement 105, les bords de l'armature, formant l'enjoliveur, présentent une butée 104 formée par une protubérance, s'étendant en direction de la concavité 104, formée en partie centrale de l'élément élastique 101. Cela permet de limiter la course de la partie centrale du moyen élastique 101, et donc de la partie d''articulation fixe 104 correspondante en direction des bords de l'armature 116.

Cette armature est agencée pour se fixer directement dans le boîtier 50 par emboîtement. Sur la périphérie de l'armature 116, plusieurs protubérances 112 s'étendent transversalement par rapport à la direction d'emboitement du masque 101 dans le boitier 50. Il y en a deux dans cet exemple. Chaque protubérance est une dent 112 reçue dans un orifice 51 du boitier 50. Ainsi les dents 112 forment des moyens de fixation à emboitement élastique du masque dans le boitier 50.

Lors du moulage du masque 100, on peut utiliser deux contre-formes démoulant en s'écartant selon une direction correspondant environ à la future direction d'émission X du faisceau, pour former l'enjoliveur 116. Ces contre-formes comprennent des creux, ou empreintes, permettant de réaliser les faces de l'enjoliveur 116, éventuellement une ouverture centrale 114 de l'enjoliveur, et en partie les moyens élastiques. Pour réaliser les évidements 105, et donc réaliser complètement les moyens élastiques, il faudra utiliser deux tiroirs se retirant pour le démoulage selon une direction différente, notamment perpendiculaire à la direction d'écartement des contre-formes.

Selon une réalisation de l'invention, ces dents 112 s'étendent transversalement par rapport à la direction d'emboitement de l'élément de plaquage 100 dans le boitier 50 et sont placées au niveau de la butée 110. Cela permet d'assurer l'emboitement du masque 100 au plus près des bras 7 de la lentille. De plus, dans le cas d'un moulage comme décrit au paragraphe précédent, on peut utiliser pour mouler les dents 112 les mêmes tiroirs que ceux qui permettent de réaliser les évidements 105. Le tiroir comprendra une broche pour chaque évidement 105 et une empreinte pour la dent 112 correspondante.

Le support de source lumineuse 17 comprend ici en outre une carte de commande électronique 21. Cette carte 21 sert, notamment, à contrôler ladite source lumineuse 6. Les bras 18 du support de source lumineuse 17 s'étendent de part et d'autre de ladite carte de commande 21, selon l'axe de rotation 3.

Ladite carte de commande 21 est avantageusement décalée radialement selon l'axe de rotation, c'est-à-dire, ici, longitudinalement selon l'axe 3 global d'émission de la source lumineuse, par rapport à la source lumineuse 6. Autrement dit, ladite source lumineuse 6 est surélevée par rapport à la carte de commande 21. On facilite de la sorte le passage de l'axe de rotation 3 par la source lumineuse 6.

Plus précisément, ici, ladite source lumineuse 6 est située au niveau d'une carte électronique spécifique 22 dudit dispositif et ladite carte électronique spécifique 22 est surélevée par rapport à ladite carte de commande 21, en direction de l'axe de rotation 3. Ladite carte spécifique 22 est constituée, par exemple, d'un substrat tel qu'un SMI tandis que ladite carte de commande 21 est constituée, par exemple, d'un substrat tel qu'un FR4. Ladite carte électronique spécifique 22 est portée par ladite carte de commande 21.

Le support de source lumineuse 17 est dans cet exemple un dissipateur thermique. Ce dissipateur thermique 17 est plus particulièrement en relation d'échange thermique avec la LED, notamment via ladite carte électronique spécifique 22.

Ledit boîtier 50 comprend une face interne 59 munie de nervures 70 de guidage desdits bras d'articulation 18 du support de source lumineuse 17. Lesdites nervures de guidage 70 contribuent à la fixation dudit support de source lumineuse 17 dans ledit boîtier 50, par l'intermédiaire desdits bras d'articulation 18 du support de source lumineuse 17.

Ladite face interne 59 du boîtier 50 pourra encore comprendre des nervures 72 d'encliquetage, à savoir d'emboîtement élastique, pour fixer le support de source lumineuse 17 par des moyens complémentaires de ces nervures. Ces derniers peuvent comprendre les bords des bras 18 du support de source lumineuse 17, comme on peut le voir en figure 5.

Comme illustré à la figure 1, le montage du dispositif lumineux selon l'invention pourra s'effectuer par l'avant dans ledit boîtier 50. Ledit boîtier 50 est alors fermé à son extrémité opposée à celle de la glace de fermeture 54 par une paroi de fond, non-visible à cette figure. Lesdites nervures de guidage 70 et/ou lesdites nervures d'encliquetage 72 sont alors ouvertes vers l'avant.

Ainsi l'assemblage du dispositif lumineux selon l'invention être réalisé par empilement dans et vers le fond du boîtier 50 du support de source lumineuse 17, de la lentille 1 et du masque 100. La fixation des éléments sera simplement réalisée par emboitement du support de source lumineuse 17 et du masque 100 sur la paroi interne du boîtier 50.

Comme la lentille 1 est enserrée directement par le support 17 de la source lumineuse 6 et le masque 100, tous deux fixés au boitier 50, il y a peu de jeu de tolérance à considérer entre la source lumineuse et la lentille.

La glace 54 ferme ensuite le boitier 50 et est scellée à celui-ci, par exemple par une soudure par vibrations. Dans ce cas, le moyen élastique 101, de part son agencement, va absorber les vibrations susceptibles de transmettre du masque 100 à la lentille 1 lors de la réalisation de la soudure par vibration ; cela évite le risque que les tourillons 9 ce soudent à la concavité 104 portée par le moyen élastique 101.

Le masque 100 présente une ouverture centrale 114. Une fois le projecteur antibrouillard assemblé, le masque entoure la lentille 1, sa partie de déviation des rayons lumineux se logeant dans l'ouverture centrale. De l'extérieur, vu de face, pratiquement seulement cette partie optique de la lentille 1 et la face avant de l'enjoliveur 116 du masque 100 sont visibles.

Pour favoriser la dissipation thermique et la compacité du projecteur, la paroi de fond du boitier 50 peut comprendre une ouverture à travers laquelle passe les ailettes du dissipateur thermique 17. Le projecteur comprend dans ce cas un joint 58, annulaire, afin d'assurer une étanchéité entre le dissipateur thermique 17 et ledit boîtier 50. Il pourra aussi comprendre un dispositif de ventilation 57 permettant de mettre le logement 52 en communication avec l'extérieur.

Selon un mode de réalisation non représenté, le montage dudit dispositif d'émission peut s'effectuer par l'arrière et ledit boîtier est fermé à son extrémité longitudinale opposée à la glace de fermeture par ledit support de source lumineuse.

Selon une possibilité de réalisation, ledit support de source lumineuse 17 peut comprendre des trous traversant 92. Les trous 92 traversant sont agencés de manière à laisser passer les fourchettes 11 de la partie d'articulation, et sont suffisamment large pour permettre le débattement de la fourchette 11. Cela facilite un montage longitudinal de la lentille 1 sur le boîtier et à travers le support 17.

Il est possible de réaliser le trou traversant 92 du support de source lumineuse 17 entre les bras d'articulation 18 du support de source lumineuse 17.

La présente invention est particulièrement avantageuse dans le cadre d'un feu antibrouillard. Cependant, elle pourrait être appliquée à d'autres dispositifs lumineux.

Par exemple, à des dispositifs lumineux avec une lentille en rotation autour d'un axe vertical pour réaliser une partie mobile d'un faisceau lumineux, notamment un premier faisceau avec une ligne de coupure oblique ou verticale, ce premier faisceau étant destiné à être combiné à un faisceau avec une ligne de coupure horizontale.

Selon une réalisation de l'invention, cette combinaison peut s'appliquer à un dispositif lumineux selon l'invention générant un faisceau lumineux élémentaire avec une coupure oblique ou verticale destiné à être combiné à un deuxième faisceau élémentaire avec la ligne de coupure horizontale. Le faisceau à coupure oblique se déplaçant horizontalement par actionnement de l'élément optique, par exemple en fonction des virages pris par le véhicule équipé du dispositif lumineux ou encore en fonction des véhicules arrivant en sens opposé.

## Revendications

1. Dispositif lumineux de véhicule automobile, comprenant :
- un boîtier (50) et une glace de fermeture (54) fermant une ouverture avant du boîtier et transparente pour laisser passer les rayons lumineux émis par ledit dispositif lumineux,
- un support de source lumineuse (17) dans le boitier et sur lequel est fixée ou est destinée à être fixée une source lumineuse (6),
- un élément optique (1) agencé pour dévier les rayons lumineux émis par la source lumineuse,
- un élément de plaquage (100) fixé au boîtier,
**caractérisé en ce que**
l'élément optique (1) est fixé par rapport à la source lumineuse (6) en étant au moins partiellement enserré entre le support de source lumineuse (17) et l'élément de plaquage (100), et **en ce que**
- au moins un moyen élastique (101) est enserré entre l'élément de plaquage (100) et ledit moyen optique (1) et est agencé de manière à être élastiquement déformable selon une direction allant de l'élément de plaquage vers l'élément optique.

2. Dispositif lumineux selon la revendication 1, dans lequel le moyen élastique (101) est en lien direct d'un côté contre l'élément de plaquage (100) et/ou de l'autre côté contre le moyen otique (1).

3. Dispositif lumineux selon la revendication 2, dans lequel le moyen élastique (101) est venu de matière en une seule pièce avec ledit élément de plaquage (100).

4. Dispositif lumineux selon l'une des revendications précédentes, dans lequel l'élément optique (1) comprend une partie de déviation des rayons lumineux (4) émis par la source lumineuse (6) et une partie d'articulation mobile (5) entre une première partie d'articulation fixe (104) et une deuxième partie d'articulation fixe (20), le moyen élastique (101) comprenant la première partie d'articulation fixe (104), et le support de source lumineuse (17) comprenant la deuxième partie d'articulation fixe (20).

5. Dispositif lumineux selon la revendication 4, dans lequel l'élément de plaquage (100) présente une armature (116) fixée au boîtier (50) et portant le moyen élastique (101), ce dernier présentant deux pattes (102 et 103) reliant chacune la première partie d'articulation fixe (104) à l'armature (116) et maintenant cette première partie d'articulation fixe (104) à distance du reste de l'armature, les pattes s'écartant l'une de l'autre depuis la première partie d'articulation fixe (104) jusqu'à l'armature, de manière à ce que l'élasticité du moyen élastique soit conférée par déformation des pattes par rapprochement de la première partie d'articulation fixe (104) vers l'armature (116).

6. Dispositif selon la revendication 5, dans lequel le moyen élastique (101) a une forme d'accolade dont les branches forment les pattes (102 et 103), ladite première partie d'articulation fixe (104) étant au sommet de l'accolade.

7. Dispositif selon la revendication 5 ou 6, dans lequel le bord de l'armature (116) en vis-à-vis de la portion du moyen élastique (101) où est formée la première partie d'articulation fixe (104) présente une butée (110) formée par une protubérance s'étendant en direction de cette portion..

8. Dispositif selon l'une des revendications 5 à 7, dans lequel l'armature (116) comprend un moyen de fixation à emboitement élastique (112) emboité dans le boîtier (50) et agencé de manière à maintenir l'élément de plaquage (100) plaqué contre l'élément optique (1) par l'intermédiaire du moyen élastique (101).

9. Dispositif selon les revendications 7 et 8 prises en combinaison, dans lequel le moyen de fixation à emboitement élastique est une protubérance (112) s'étendant transversalement par rapport à la direction d'emboitement de l'élément de plaquage (100) dans le boitier (50) et placée au niveau de la butée (110).

10. Dispositif lumineux selon l'une quelconque des revendications 4 à 9, dans lequel ladite partie d'articulation mobile (5) comprend deux bras (7) de part et d'autre de la partie de déviation (4) de l'élément optique (1), ces bras (7) étant libres en rotation dans lesdites parties d'articulation fixes (101 et 20), de manière à ce que l'élément optique soit apte à être orienté par rotation autour d'un axe de rotation (3) passant par ces deux bras (7).

11. Dispositif lumineux selon l'une quelconque des revendications précédentes, dans lequel l'élément optique est une lentille (1).

12. Dispositif lumineux selon l'une quelconque des revendications précédentes, dans lequel l'élément de plaquage est un masque (100) placé en avant du support de source lumineuse (6) selon la direction d'émission du faisceau lumineux par ledit dispositif lumineux.

13. Dispositif selon la revendication 12, dans lequel l'armature (116) du masque (100) est un enjoliveur visible depuis l'extérieur dudit dispositif lumineux avec une ouverture centrale (114) à travers laquelle passe les rayons lumineux émis par la source lumineuse (6), après ou avant déviation par l'élément optique (1).

14. Dispositif lumineux selon l'une quelconque des revendications précédentes, dans lequel l'élément optique est en appui direct contre le support de source lumineuse.

15. Dispositif lumineux selon l'une quelconque des revendications précédentes, ladite glace de fermeture (54) étant soudée audit boîtier (50) par une soudure obtenue par un soudage par vibrations.

16. Dispositif lumineux selon l'une quelconque des revendications précédentes, dans lequel le boîtier (50) présente une portion cylindrique à l'intérieur de laquelle le support de source lumineuse (17), la lentille (1) et l'élément de plaquage s'empilent selon cet ordre, selon une direction parallèle à l'axe de la portion cylindrique.

17. Dispositif lumineux selon l'une des revendications précédentes, ce dispositif lumineux étant un feu antibrouillard, dans lequel ledit élément optique (1) est agencé de manière à réfléchir les rayons lumineux de manière à former un faisceau d'éclairage présentant une ligne de coupure horizontale.

## Patentansprüche

1. Kraftfahrzeug-Beleuchtungsvorrichtung mit :
- ein Gehäuse (50) und ein Verschlußglas (54), das eine vordere Öffnung des Gehäuses verschließt und transparent ist, um den Durchgang der von der genannten Leuchtvorrichtung emittierten Lichtstrahlen zu ermöglichen,
- einen Lichtquellenhalter (17) im Gehäuse, an dem eine Lichtquelle (6) befestigt ist oder befestigt werden soll,
- ein optisches Element (1), das so angeordnet ist, dass es die von der Lichtquelle emittierten Lichtstrahlen ablenkt,
- ein am Gehäuse befestigtes Stützelement (100),
in diesem
das optische Element (1) relativ zur Lichtquelle (6) fixiert ist, indem es zumindest teilweise zwischen dem Lichtquellenhalter (17) und dem Stützelement (100) eingeklemmt ist, und dass
mindestens ein elastisches Mittel (101) zwischen dem Stützelement (100) und dem optischen Element (1) eingeklemmt und so angeordnet ist, dass es in einer Richtung vom Stützelement zum optischen Element elastisch verformbar ist.

2. Beleuchtungsvorrichtung nach Anspruch 1, wobei das elastische Mittel (101) in direkter Verbindung auf einer Seite gegen das Stützelement (100) und/oder auf der anderen Seite gegen das optische Element (1) steht.

3. Beleuchtungsvorrichtung nach Anspruch 2, bei der das elastische Mittel (101) einstückig mit dem Stützelement (100) ausgebildet ist.

4. Beleuchtungsvorrichtung nach einem der vorstehenden Ansprüche, bei der das optische Element (1) einen Teil zur Ablenkung der von der Lichtquelle (6) emittierten Lichtstrahlen (4) und einen beweglichen Gelenkteil (5) zwischen einem ersten festen Gelenkteil (104) und einem zweiten festen Gelenkteil (20) umfasst, wobei das elastische Mittel (101) den ersten festen Gelenkteil (104) umfasst und der Lichtquellenträger (17) den zweiten festen Gelenkteil (20) umfasst.

5. Beleuchtungsvorrichtung nach Anspruch 4, bei der das Stützelement (100) einen Rahmen (116) aufweist, der an dem Gehäuse (50) befestigt ist und die elastischen Mittel (101) trägt, wobei letztere zwei Laschen (102 und 103) aufweisen, die jeweils den ersten festen Gelenkteil (104) mit dem Rahmen (116) verbinden und diesen ersten festen Gelenkteil (104) in einem Abstand vom Rest des Rahmens halten, wobei sich die Schenkel vom ersten festen Scharnierteil (104) zum Rahmen hin voneinander entfernen, so dass die Elastizität des elastischen Mittels durch Verformung der Schenkel vermittelt wird, indem das erste feste Gelenkteil (104) näher an den Rahmen (116) gebracht wird.

6. Beleuchtungsvorrichtung nach Anspruch 5, bei der das elastische Mittel (101) die Form einer Strebe hat, deren Schenkel die Schenkel (102 und 103) bilden, wobei sich das erste feste Gelenkteil (104) an der Spitze der Strebe befindet.

7. Beleuchtungsvorrichtung nach Anspruch 5 oder 6, bei der die Kante des Rahmens (116), die dem Abschnitt des elastischen Mittels (101) gegenüberliegt, in dem das erste feste Gelenkteil (104) ausgebildet ist, einen Anschlag (110) aufweist, der von einem Vorsprung gebildet wird, der sich in Richtung dieses Abschnitts erstreckt.

8. Beleuchtungsvorrichtung nach einem der Ansprüche 5 bis 7, bei der der Rahmen (116) ein elastisches Befestigungsmittel (112) aufweist, das in das Gehäuse (50) eingepasst und so angeordnet ist, dass es das Stützelement (100) mittels des elastischen Mittels (101) gegen das optische Element (1) gepresst hält.

9. Beleuchtungsvorrichtung nach den Ansprüchen 7 und 8 in Kombination genommen, wobei das elastisch einrastende Befestigungsmittel ein Vorsprung (112) ist, der sich quer zu der Richtung erstreckt, in der das Trägerelement (100) in das Gehäuse (50) eingepasst ist und sich am Anschlag (110) befindet.

10. Beleuchtungsvorrichtung nach einem der Ansprüche 4 bis 9, bei der der genannte bewegliche Gelenkteil (5) zwei Arme (7) beiderseits des Ablenkteils (4) des optischen Elements (1) aufweist, wobei diese Arme (7) in den genannten festen Gelenkteilen (101 und 20) frei drehbar sind, so dass das optische Element durch Drehung um eine durch diese beiden Arme (7) verlaufende Drehachse (3) ausgerichtet werden kann.

11. Beleuchtungsvorrichtung nach einem der vorstehenden Ansprüche, wobei das optische Element eine Linse (1) ist.

12. Beleuchtungsvorrichtung nach einem der vorstehenden Ansprüche, wobei das tragende Element eine Maske (100) ist, die vor dem Lichtquellenträger (6) in der Richtung der Emission des Lichtstrahls durch die Beleuchtungsvorrichtung angeordnet ist.

13. Beleuchtungsvorrichtung nach Anspruch 12, wobei der Rahmen (116) der Maske (100) eine von der Außenseite der Beleuchtungsvorrichtung sichtbare Abdeckung mit einer zentralen Öffnung (114) ist, durch die die von dem Lichtquellenträger (6) emittierten Lichtstrahlen nach oder vor der Ablenkung durch das optische Element (1) hindurchtreten.

14. Beleuchtungsvorrichtung nach einem der vorstehenden Ansprüche, bei der das optische Element direkt an der Lichtquellenhalterung anliegt.

15. Beleuchtungsvorrichtung nach einem der vorstehenden Ansprüche, wobei das Deckglas (54) mit dem Gehäuse (50) durch eine durch Vibrationsschweißen erhaltene Schweißnaht verschweißt ist.

16. Beleuchtungsvorrichtung nach einem der vorstehenden Ansprüche, bei der das Gehäuse (50) einen zylindrischen Teil aufweist, in dem der Lichtquellenträger (17), die Linse (1) und das Stützelement in dieser Reihenfolge in einer Richtung parallel zur Achse des zylindrischen Teils gestapelt sind.

17. Beleuchtungsvorrichtung nach einem der vorstehenden Ansprüche, wobei diese Beleuchtungsvorrichtung ein Nebelscheinwerfer ist, in dem das optische Element (1) so angeordnet ist, dass es die Lichtstrahlen so reflektiert, dass ein Beleuchtungsbündel mit einer horizontalen Hell-Dunkel-Grenze gebildet wird.

## Claims

1. A luminous device for a motor vehicle, comprising :
- a housing (50) and an outer lens (54) closing a front opening of the housing and transparent to allow the luminous rays emitted by said luminous device to pass through,
- a luminous source holder (17) in the housing and to which a luminous source (6) is fixed or is intended to be fixed,
- an optical element (1) arranged to deflect the luminous rays emitted by the light source,
- a pressing element (100) attached to the housing, **characterized in that**
the optical element (1) is fixed in relation to the luminous source (6) by being at least partially clamped between the light source support (17) and the pressing element (100), and **in that** at least one elastic means (101) is clamped between the pressing element (100) and said optical element (1) and is arranged so as to be elastically deformable in a direction from the support element towards the optical element.

2. Luminous device according to claim 1, wherein the elastic means (101) is in direct connection on one side against the pressing element (100) and/or on the other side against the optical element (1).

3. Luminous device according to claim 2, in which the elastic means (101) is integral with said pressing element (100).

4. Luminous device according to one of the preceding claims, in which the optical element (1) comprises a part (4) for deflecting the luminous rays emitted by the light source (6) and a mobile articulation part (5) between a first fixed articulation part (104) and a second fixed articulation part (20), the elastic means (101) comprising the first fixed articulation part (104), and the light source support (17) comprising the second fixed articulation part (20).

5. Luminous device according to claim 4, in which the pressing element (100) has a frame (116) fixed to the housing (50) and carrying the elastic means (101), the latter having two lugs (102 and 103) each connecting the first fixed articulation part (104) to the frame (116) and keeping this first fixed articulation part (104) at a distance from the rest of the frame, the legs moving away from each other from the first fixed joint part (104) to the frame, so that the elasticity of the elastic means is imparted by deformation of the legs by moving the first fixed articulation part (104) towards the frame (116) .

6. Luminous device according to claim 5, in which the elastic means (101) is in the form of a brace whose branches form the legs (102 and 103), said first fixed articulation part (104) being at the top of the brace.

7. Luminous device according to claim 5 or 6, in which the edge of the frame (116) facing the portion of the elastic means (101) where the first fixed articulation part (104) is formed has a stop (110) formed by a protuberance extending in the direction of this portion.

8. Luminous device according to one of claims 5 to 7, in which the frame (116) comprises an elastic interlocking fixing means (112) fitted into the housing (50) and arranged so as to keep the pressing element (100) pressed against the optical element (1) by means of the elastic means (101).

9. Luminous device according to claims 7 and 8 in combination, wherein the resiliently snap-fit fastening means is a protrusion (112) extending transversely to the direction in which the pressing element (100) is fitted into the housing (50) and located at the stop (110).

10. Luminous device according to any one of claims 4 to 9, in which the said movable articulation part (5) comprises two arms (7) on either side of the deflection part (4) of the optical element (1), these arms (7) being free to rotate in the said fixed articulation parts (101 and 20), so that the optical element is capable of being oriented by rotation about an axis of rotation (3) passing through these two arms (7).

11. Luminous device according to any of the foregoing claims, wherein the optical element is a lens (1).

12. Luminous device according to any of the preceding claims, in which the pressing element is a mask (100) placed in front of the light source support (6) in the direction of emission of the light beam by said luminous device.

13. Luminous device according to claim 12, wherein the frame (116) of the mask (100) is a bezel visible from the outside of said luminous device with a central opening (114) through which the luminous rays emitted by the light source support (6) pass, after or before deviation by the optical element (1).

14. Luminous device according to any of the preceding claims, in which the optical element is in direct contact with the light source support.

15. Luminous device according to any of the foregoing claims, said outer lens (54) being welded to said housing (50) by a weld obtained by vibration welding.

16. Luminous device according to any of the preceding claims, in which the housing (50) has a cylindrical portion inside which the light source support (17), the lens (1) and the pressing element are stacked in this order, in a direction parallel to the axis of the cylindrical portion.

17. Luminous device according to one of the preceding claims, this luminous device being a fog lamp, in which the said optical element (1) is arranged so as to reflect the light rays so as to form an illuminating beam having a horizontal cut-off line.
